# EUROPEAN PATENT APPLICATION

(11) **EP 2 207 338 A2**
(43) Date of publication of application: **14.07.2010**
(21) Application number: 09015906.2
(22) Date of filing: 22.12.2009
(51) Int. Cl.: H04N 1/23, H04N 1/40

(54) **Image processing apparatus, printing apparatus, and image processing method**

(30) Priority: 25.12.2008 JP 2008329967
(71) Applicant: Canon Kabushiki Kaisha, Ohta-ku Tokyo (JP)
(72) Inventor: Ichimura, Akira, Ohta-ku, Tokyo (JP); Fujimoto, Yasunori, Ohta-ku, Tokyo (JP); Miyazaki, Shinichi, Ohta-ku, Tokyo (JP); Horikoshi, Hiroki, Ohta-ku, Tokyo (JP)
(74) Representative: Weser, Thilo

(57) **Abstract**

The quantity processing is executed to data distributed for each color. Binary data obtained by this quantization processing are selected only in regard to a color generating print quantity information. Filtering processing is executed to the binary data of the selected color to generate the print quantity information. In the quantization processing for a second plane, data found by converting the print quantity information generated in the first plane processing into a minus value are added to the multi-valued data. In the quantization processing in the second plane added, the value of the multi-valued data is made small and in the quantity, probability that the multi-valued data become binary data printing the dots is made small. That is, a ratio where dots in the first plane and dots in the second plane overlap and are formed can be made small.

## Description

### BACKGROUND OF THE INVENTION

### Field of the Invention

The present invention relates to an image processing apparatus, a printing apparatus, and an image processing method, and particularly, to a print data generating configuration that enables an image print to have a tolerance for image quality degradation against variations of print characteristics between printing elements of a print head, a fluctuation in scanning of the print head, a conveying error of a print medium and the like.

### Description of the Related Art

As an example of a printing system using a print head provided with a plurality of printing elements, there is known an inkjet print system which ejects ink from an ejection opening as the printing element to form dots on a print medium. Such an inkjet printing apparatus is classified into a full line type and a serial type depending particularly on a difference in construction of the print head.

The full line type printing apparatus is provided with the print head which includes printing elements arranged over a range corresponding to a width of the print medium conveyed and is used in a fixed state at printing. The print medium is conveyed in a direction, which intersects the array direction of the printing elements, relative to the print head used in the fixed state and ink is ejected to the print medium in a predetermined frequency from the print head to form an image. Such a full line type printing apparatus can form the image at a relatively high speed and is suitable for office use. On the other hand, in the serial type printing apparatus, a print head scans a print medium, ink is ejected thereon at a predetermined frequency during the scanning, and a conveying operation conveying the print medium in a direction intersecting with the scanning direction of the print head is performed for each scan to form an image. Such a serial type printing apparatus can be manufactured in a relatively small size and at low costs and is suitable for personal use.

In any of these full line type and serial type printing apparatuses, a plurality of printing elements arranged in the print head contain a certain degree of variations in the manufacturing process. These variations appear as variations of ejection characteristics such as an ejection amount or an ejection direction of ink to produce irregular shapes of dots formed on the print medium, as a result possibly creating uneven density or stripes on an image.

For overcoming this problem, a so-called multi-pass printing system is employed in the serial type inkjet printing apparatus, for example. In the multi-pass printing, pixels to which the print head can perform printing in one-time printing main scan are distributed to a plurality of scans of the print head between which a conveying operation of the print medium is performed so as to make different printing elements used in the plurality of scans for performing the printing operation. This allows the variations in ejection characteristics in the plurality of the printing elements to be dispersed into the plurality of scans for completing the image, enabling the uneven density to be indistinctive. This multi-pass print system can be also applied to the full line type printing apparatus.

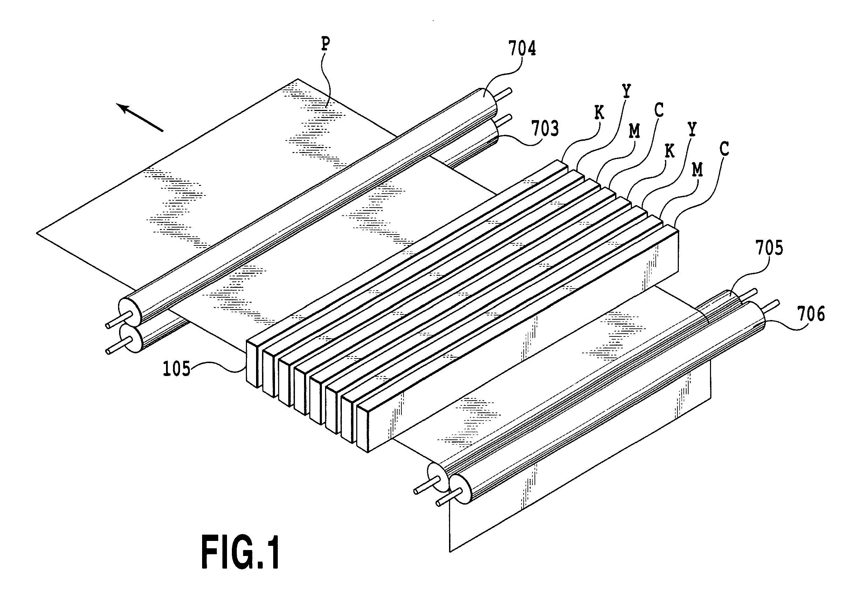

As shown in Fig. 1, two lines of printing elements in regard to ink of the same color are arranged in a conveying direction of the print medium, thereby enabling the dot line formed in the conveying direction to be shared and printed by the two printing element lines. As a result, the variation of the printing elements in one printing element line is dispersed into 1/2, enabling the uneven density due to the variation to be indistinctive.

In a case of performing the multi-pass printing, print data of the image are distributed into plural times of printing scans or a plurality of print heads (printing element lines) for completing the image. Conventionally most of the times this distribution is carried out by using a mask pattern in which a pixel ("1") permitting printing a dot and a pixel ("0") not permitting printing a dot are in advance defined corresponding to an individual printing element.

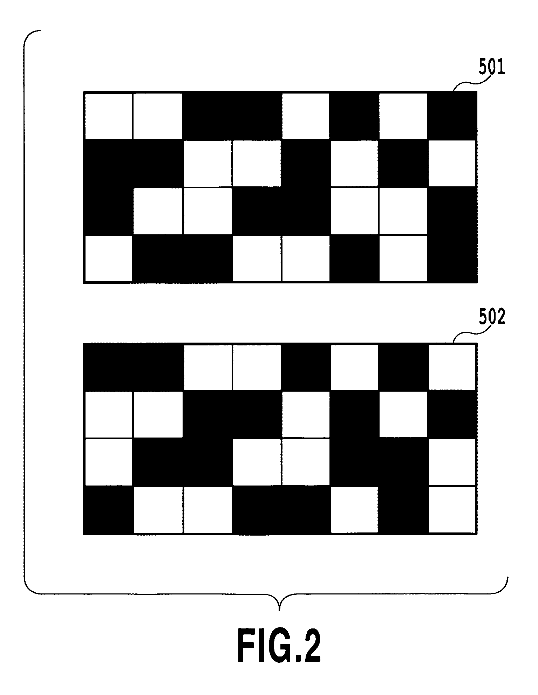

Fig. 2 is a diagram showing an example of a mask pattern used in a multi-pass print for completing a printing by two times of scans (hereinafter, also called "pass") in the serial system. In Fig. 2, black areas each show a pixel ("1") permitting printing of a dot and white areas each show a pixel ("0") not permitting printing of a dot, and number 501 denotes a mask pattern used in a scan of first pass and number 502 denotes a mask pattern used in a scan of second pass. The pattern 501 and the pattern 502 are complementary with each other in regard to print permitting pixels (or print non-permitting pixels), and therefore, dots constituting an image to be completed are formed in any one of the first pass and second pass. Specifically, in regard to print data of the image to be completed, a logical product is carried out for each pixel between image data to be completed and the above patterns and thus the result becomes binary data according to which respective printing elements actually executes printing in each pass.

However, an arrangement of the print data ("1") in the pixels according to which printing is performed varies depending on the image to be printed. Therefore, it is difficult to always evenly distribute such a print data to the plurality of scans or plurality of printing element lines by using a mask pattern in which a pattern of the print permitting pixels is previously defined. Thus, a particular scan or a particular printing element line may print a high ratio of dots, and as a result, the ejection characteristic of the particular scan or of the particular printing element line appears in the image to decrease the original advantage of the multi-pass printing. Accordingly, in the multi-pass printing, how equally and evenly the print data are distributed into the plural scans or the plural printing element lines is one of important issues.

For example, Japanese Patent Laid-Open No. H07-052390 (1995) describes a method of producing a mask pattern in which print permitting pixels and print non-permitting pixels are arranged at a random. By using this random mask pattern, the print data can be expected to be distributed substantially equally to the plural scans and the plural printing element lines even in the print data of any image.

In addition, Japanese Patent Laid-Open No. H06-191041(1994) describes a method in which the fixed mask pattern as shown in Fig. 2 is not used, but print data ("1") of plural pixels to be printed continuously in a main scan direction or in a sub scan direction are distributed to be printed in different scans as many as possible.

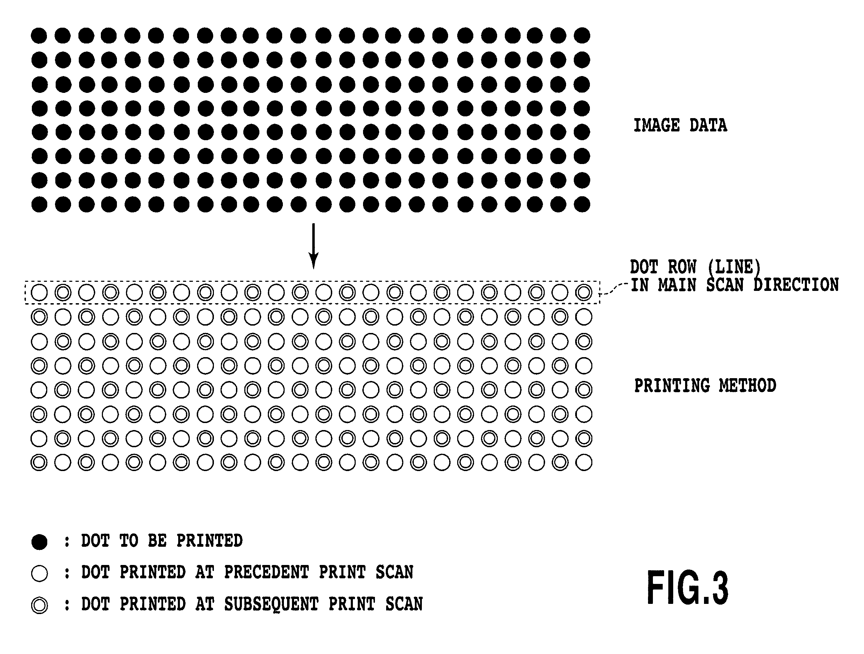

Fig. 3 is diagrams showing an arrangement of print pixels of binary image data and the result in which the print pixels are distributed to two scans according to the method described in Japanese Patent Laid-Open No. H06-191041(1994). In this way, the dots continuous in a main scan direction and in a sub scan direction are distributed equally to different scans. Thereby, not only image degradation due to variations in ejection characteristics of the printing element, but also defects such as ink overflow can be effectively reduced.

Even if the above multi-pass system is employed, under recent situations where a higher-quality printing is demanded, a density change or an uneven density due to a shift of a print position (registration) in a scan unit or in a nozzle line unit is seen newly as a problem. The shift of the print position in the scan unit or in the nozzle line unit is caused by fluctuations in distance between the print medium and the ejection opening surface (distance from a sheet), fluctuations of a conveying amount of the print medium or the like, and appears as a shift between planes of image printed in respective scans (or by respective nozzle lines).

For example, there will be considered a case where in an example shown in Fig. 3, a plane of dots (one circle) printed in the precedent scan and a plane of dots (double circle) printed in the subsequent scan are shifted by an amount corresponding to one pixel from each other in any one of a main scan direction and a sub scan direction. In this case, the dots (one circle) printed in the precedent scan and the dots (double circle) printed in the subsequent scan completely overlap to generate white areas on the print medium, and the white areas lower the density of image. Even in a case where the shift is not as large as one pixel, the fluctuations in the distance between the neighboring dots and the overlapped portion have a large impact on a coverage of dots to the white areas of the print medium, finally on the image density. Specifically, when the shift between the planes changes with the fluctuation in the distance between the print medium and the ejection opening surface (the distance from a sheet) or the fluctuation in the conveying amount of the print medium, the density of the uniform image also changes with these fluctuations, which results in being recognized as density unevenness.

Therefore, there is a demand for a method of producing print data in the multi-pass printing in which even if the print position shift occurs between the planes, the image quality is not remarkably deteriorated due to the position shift. In the present specification, regardless of fluctuations in any printing condition, a tolerance property that shows how hard to produce the density change or the uneven density due to the print position shift even if the print position shift between the planes occurs due to the fluctuation are called a "robustness".

Japanese Patent Laid-Open No. 2000-103088 describes a method of producing print data for enhancing the above robustness. More specifically, this producing method has paid attention on a fact that the fluctuation in the image density due to the print position shift is, as described in detail in Fig. 3, caused by that binary print data distributed to plural times of scans or plural nozzle lines are completely complementary with each other. For reducing the extent of the above complementarity, the distribution of the image data to the plural times of the scans or the plural nozzle lines is carried out in a state of multi-valued data before binarizing and the multi-valued data after distributed are independently binarized.

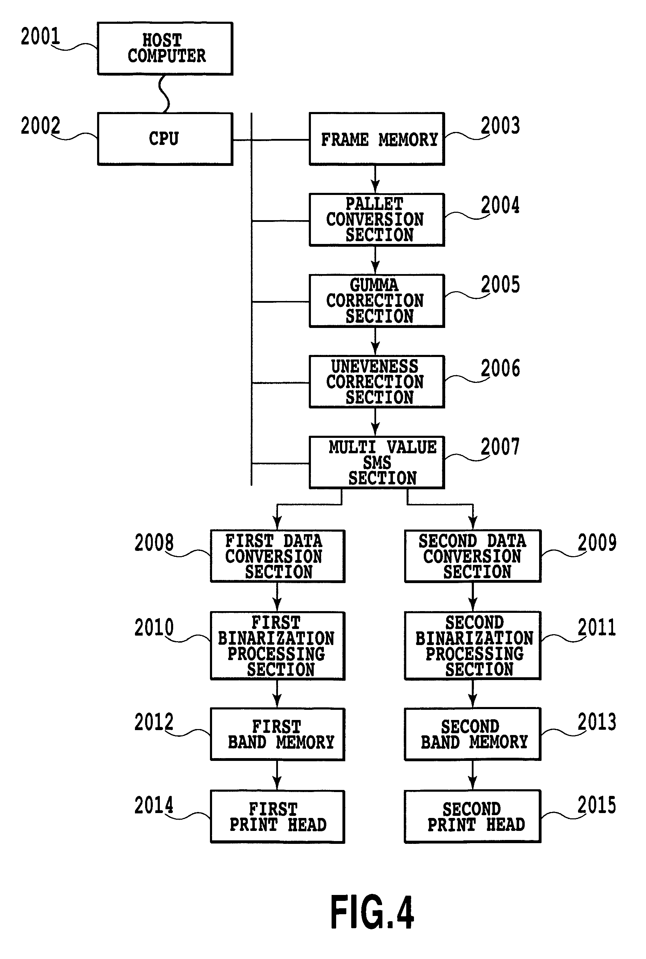

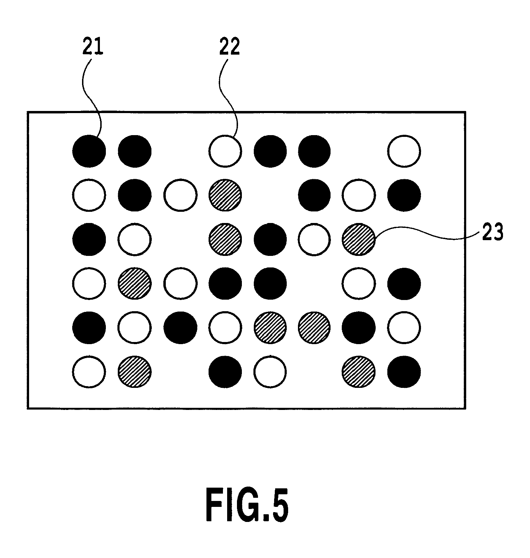

Fig. 4 is a block diagram showing a control configuration example for realizing data distribution described in Japanese Patent Laid-Open No. 2000-103088. This figure shows an example of distributing print data to two print heads (two nozzle lines). Multi-valued image data received from a host computer 2001 are subject to various kinds of image processing (2004 to 2006), and thereafter, a multi value SMS section 2007 generates data for a first print head and data for a second print head based on the data that has been subjected to the various kinds of image processing. Specially the same multi-valued image data to which the image processing has been executed are prepared as the data for the first print head and the data for the second print head. In a first data conversion section 2008 and a second data conversion section 2009, conversion processing is executed using respective distribution coefficients. For example, a distribution coefficient of 0.55 is used to the data for the first print head and a distribution coefficient of 0.45 is used to the data for the second print head to execute the conversion processing. In consequence, the content of binarization processing to be executed later can be made different between the data for the first print head and the data for the second print head. Then, as described later in Fig. 5, overlaps of dots by the first print head and dots by the second print head finally formed can be generated in a certain ratio. It should be noted that Japanese Patent Laid-Open NO. 2000-103088 describes, in addition to an example where the distribution coefficient varies between the data for the first print head and the data for the second print head, an example where an error diffusion matrix used in error diffusion processing as binarization processing or threshold values in the error diffusion matrix varies.

The multi-valued data converted as above are transferred to a first binarization processing section 2010 and a second binarization processing section 2011. In the first binarization processing section 2010 and the second binarization processing section 2011, the binarization processing is executed by an error diffusion method using an error diffusion matrix and threshold values, and the binarized image data are stored respectively in a first band memory 2012 and in a second band memory 2013. Thereafter, the first and second print heads eject ink according to the binary data stored in the respective band memories to perform printing.

Fig. 5 is a diagram showing an arrangement of dots on the print medium which are printed according to the aforementioned processing described in Japanese Patent Laid-Open No. 2000-103088. In Fig. 5, a black circle 21 shows a dot printed by the first print head, a white circle 22 shows a dot printed by the second print head, a circle 23 shown in a hatched line shows a dot printed in an overlapped manner by the first print head and the second print head.

Here, a case will be considered where in the same way as the example shown in Fig. 3, a plane of dots printed in the first print head and a plane of dots printed in the second print head are shifted by an amount corresponding to one pixel from each other in any one of a main scan direction or a sub scan direction. In this case, dots printed in an overlapped manner by both the first print head and the second print head are newly increased, but there exist also dots where the dot composed of two dots which are already printed in the overlapped manner is separated. Accordingly, when the determination is made based upon an area having a certain breadth, the coverage of the dots to the white area does not change so much, therefore not inviting a change of the image density. That is, the overlap of the dots is generated in a certain rate while basically eliminating complementarity or exclusiveness of dot formation by different scans or different print heads. Thereby, even if a shift of a print position due to fluctuations in scan speed of the carriage, fluctuations in distance (distance from a sheet) between the print medium and the ejection opening surface, fluctuations in conveying amount of the print medium, and the like is generated, the degree of fluctuations in image density or the density unevenness due to the fluctuations can be reduced to be small.

Further, Japanese Patent Laid-Open No. 2006-231736 describes the print data generation similar to that in Japanese Patent Laid-Open No. 2000-103088. Specifically, in the same way as Japanese Patent Laid-Open No. 2000-103088, the distribution coefficients are made different between the plural scans or between the plural printing element lines at the time of distributing the multi-valued image data to the plural scans or the plural printing element lines. In Japanese Patent Laid-Open No. 2006-231736, the distribution coefficient varies in accordance with pixel positions. For example, the distribution coefficients of two print heads vary in a linear way, in a periodical way, in a sinusoidal wave way, and in a combined wave way of a high frequency and a low frequency to the pixel position in a main scan direction, thereby restricting banding or color unevenness in the multi-pass printing.

However, in the print data generation described in Japanese Patent Laid-Open No. 2000-103088 and Japanese Patent Laid-Open No. 2006-231736, complementarities or exclusiveness between dots printed by different print heads or between dots printed in different scans can not be basically controlled. Therefore, a ratio of pixels where dots overlap may be excessively large or inversely a ratio of blank areas where dots are not printed may be excessively large, depending on an image to be printed, thus possibly decreasing an image quality. That is, as described before, to restrict the density fluctuation due to the print position shift between the planes, a fact that respective dots printed in a plurality of scans have no complementary relation with each other, that is, a fact that there exist the pixel where the dots are printed in an overlapped manner in the plurality of scans is effective. On the other hand, when such pixels exist too many, the dot coverage may decrease and adversely decease in the density may be possibly caused.

The inventors of the present application have found out that, for solving the aforementioned problem, when quantizing data of a plurality of planes which are obtained by dividing multi-valued data, the result of quantizing for one plane is reflected as print quantity information to data in the plane for which quantization is performed after performing quantizing for the one plane. In consequence, given complementarity or exclusiveness can be brought between respective print data of the plurality of planes to allow a ratio of the pixels where the dots overlap to be appropriate.

An object of the present invention is to reduce a memory capacity and a processing amount in a case of employing the above-mentioned configuration that reflects the print quantity information to quantization of the other plane.

More specifically, there has been recently commercialized in the market a so-called large-sized printer in which a print width of the printing apparatus is widened more largely, for example, a print width of 60 inches, as compared to that in the printing apparatus used in the conventional disc top. This type of large-sized printers cause a large increase in the memory capacity needed for executing the image processing due to a wide print width thereof. Further, in addition to four colors of CMYK, light color ink of C, M or the like, and ink of a color called particular color such as red and green tend to be used for improving a print quality, thus increasing the number of ink colors to be mounted on the printer. Such an increase in the ink color number is also the cause of largely increasing a memory capacity to be equipped on a printing apparatus. Further, also in the large-sized printer, a high-speed print processing performance is required and thus it is needed to mount a large capacity of the memory for improving the processing performance.

Mounting a large capacity of the memory in this way causes an increase in cost of the printing apparatus, and the processing amount is increased in response thereto. For reflecting the above print quantity information to the other plane, the memory corresponding to the reflecting is required and therefore, it is preferable to reduce the memory capacity for the reflecting as much as possible.

### SUMMARY OF THE INVENTION

The present invention provides an image processing apparatus, a printing apparatus and an image processing method which restrict an increase in a memory capacity in the configuration of bringing a complementary relation in the distribution of the multi-valued data.

The present invention in a first aspect provides an image processing apparatus as specified in claims 1 to 10.

The present invention in a second aspect provides a printing apparatus as specified in claim 11.

The present invention in a third aspect provides an image processing method as specified in claim 12.

According to the above configuration, for a plurality of print data of divided images which are respectively obtained by quantizing the multi-valued data, it is determined based on the print data whether the print quantity information for correcting the multi-valued data before being quantized is generated. Therefore, it is possible not to make the above determination for generating the print quantity information, for a color where an impact by the printing position shift in the printed image is small, for example, yellow, even if the correction is not made by generating the print quantity information. As a result, it is possible to carry out an image printing excellent in robustness in regard to the print position shift, in a small memory capacity.

Further features of the present invention will become apparent from the following description of exemplary embodiments (with reference to the attached drawings).

### BRIEF DESCRIPTION OF THE DRAWINGS

Fig. 1 is a perspective view showing the schematic construction of a full line type inkjet printing apparatus according to an embodiment of the present invention;

Fig. 2 is diagrams each showing an example of a mask pattern used in a multi-pass print for completing a print by twice scans in a serial print system;

Fig. 3 is diagrams showing an arrangement of print pixels in binary image data and the result obtained by distributing the print pixels to twice scans according to the method described in Japanese Patent Laid-Open No. H06-191041 (1994);

Fig. 4 is a block diagram showing a control construction example for realizing data distribution according to the above conventional example;

Fig. 5 is a diagram showing an arrangement of dots printed on a print medium according to the distribution processing in the above conventional example;

Fig. 6 is a block diagram showing the control construction in a printer according to the embodiment of the present invention;

Fig. 7 is a diagram showing the construction of function sections and the format of image data to be processed in the image processing section shown in Fig. 6;

Figs. 8A and 8B are diagrams each showing a filter calculation according to the embodiment of the present invention, wherein 8A shows coefficients in the filter calculation and 8B shows the calculation result;

Fig. 9 is diagrams showing the binary data before filtering processing shown in Fig. 8 and the result after the above filtering processing is executed to the binary data;

Fig. 10 is a flow chart showing the processing for a first plane by the image processing section according to a first embodiment of the present invention;

Fig. 11 is a flow chart showing the processing for a second plane by the image processing section according to the first embodiment of the present invention;

Fig. 12 is a flow chart showing the processing for quantizing the image data distributed to images in N planes by the image processing section according to a second embodiment of the present invention;

Fig. 13 is a perspective view explaining the schematic construction of a serial type inkjet printing apparatus according to a third embodiment of the present invention;

Fig. 14 is diagrams each explaining a state of a print by plural times of scans in the third embodiment of the present invention;

Fig. 15 is a diagram showing a position relationship between a print medium and a print head in the third embodiment of the present invention; and

Fig. 16 is a block diagram showing the control construction in a printing apparatus according to a fourth embodiment of the present invention.

### DESCRIPTION OF THE EMBODIMENTS

Hereinafter, embodiments of the present invention will be in detail explained with reference to the drawings. (First Embodiment)

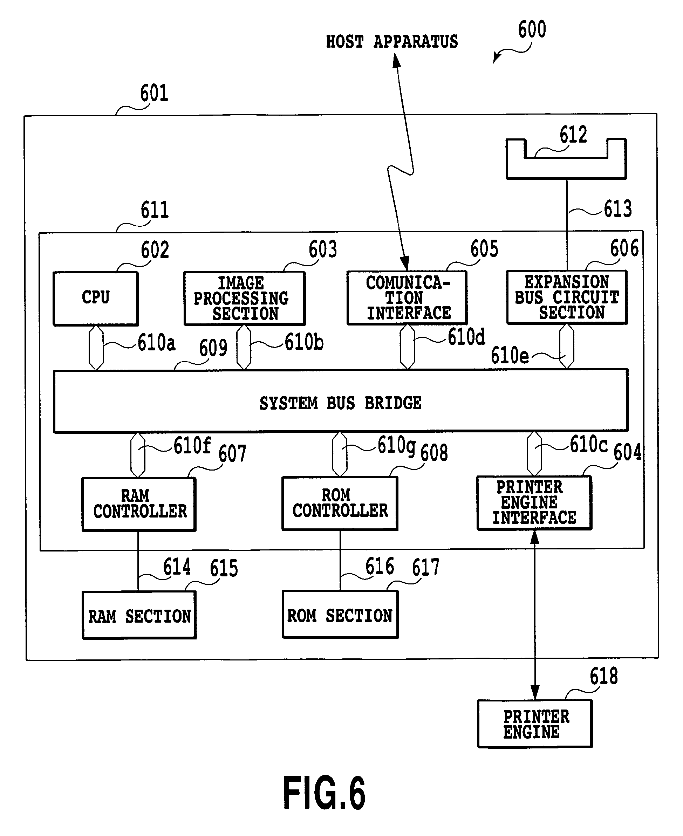

Fig. 6 is a block diagram showing the control configuration in the aforementioned inkjet printing apparatus. As shown in Fig. 6, a printer 600 is generally configured of a controller 601 and a printer engine 618. The controller 601 receives a print instruction and image data for printing from a host computer such as a personal computer and converts the received image data into binary data of a printable form at the printer engine 618 and outputs the binary data. The controller 601 is provided with a CPU 602, an image processing section 603, a printer engine interface section 604, a communication interface section 605, an expansion bus circuit section 606, a RAM controller 607, and a ROM controller 608. Further, each of these sections is connected through respective bus lines 610a to 610g to a system bus bridge 609. In the present embodiment, these sections are realized as an image formation controller ASIC (Application Specified Integrated Circuit) 611 enclosed by one package as a system LSI. The controller 601 is constructed to include an expansion slot 612 to which a function expansion unit is mounted, a RAM section 615 and a ROM section 617, and besides, a control section (not shown), a display section, a power circuit section and the like.

The CPU 602 controls the entire controller 601, and reads out and executes programs such as the control procedure stored in the ROM section 617 or the RAM section 615. For example, controlling the image processing section 603 is performed for converting image data received from the host apparatus into print data as binary data. In addition, the CPU 602 performs control of the communication interface section 605, interpretation of communication protocol, control of the printer engine interface section 604 for transferring print data generated by the image processing section 603 to the printer engine 618, and the like.

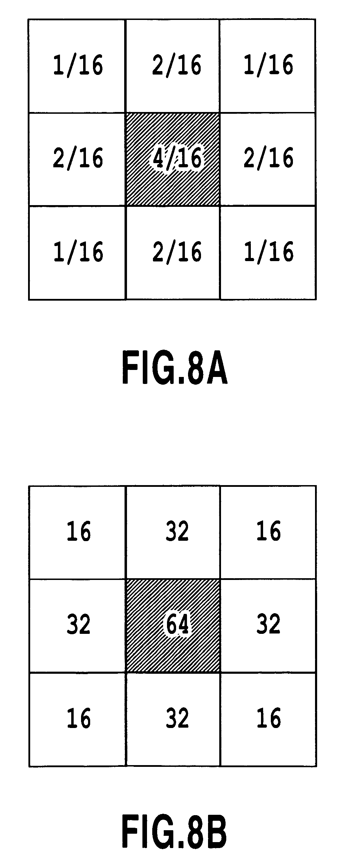

The image processing section 603 is configured to convert image data received from the host apparatus into print data printable in the printer engine 618 and the detailed configuration for the conversion will be explained in Fig. 8 and the subsequent figures. The printer engine interface section 604 is a section of transmitting and receiving data between the controller 601 and the printer engine 618. Specifically, the printer engine interface section 604 has a DMAC (direct memory access controller). In consequence, binary data generated by the image processing section 603 and stored in the RAM section 615 are read out through the RAM controller 607 sequentially and can be transferred to the printer engine 618.

The communication interface section 605 transmits and receives data to and from a host apparatus such as a personal computer or a work station and stores image data received from the host apparatus in the RAM section 615 through the RAM controller 607. A communication system of the communication interface section 605 may adopt any system of high-speed serial communication such as USB and IEEE 1394, parallel communication such as IEEE 1284 or network communication such as 100BASE-TX. In addition, a combination of these communication systems may be adopted. Further, not only wired communication systems, but also wireless communication systems may be adopted.

The expansion bus circuit section 606 controls a function expansion unit mounted to an expansion slot 612. For example, the expansion bus circuit section 606 performs control of transmitting data through an expansion bus 613 to the function expansion unit and control of receiving data outputted from the function expansion unit. A communication unit for providing a communication function to the host apparatus, such as USB, IEEE 1394, IEEE 1284 or network communication, a hard disc drive unit for providing a large capacity memory function or the like can be mounted to the expansion slot 612.

It should be noted that the image processing section 603, the communication interface section 605, and the expansion bus circuit section 606 each have DMAC in the same way as the printer engine interface section 604 and can issue a memory access demand.

The RAM controller 607 controls the RAM section 615 connected through the RAM bus 614 to the image formation controller ASIC 611. The RAM controller 607 relays data written in and read out between the CPU 602, each section having the DMAC, and the RAM section 615. The RAM controller 607 generates control signals necessary in accordance with a reading-out demand or a writing-in demand from the CPU 602 and the each section to realize the writing-in to the RAM section 615 or the reading-out from the RAM section 615.

The ROM controller 608 controls the ROM section 617 connected through the ROM bus 616 to the image formation controller ASIC 611. The ROM controller 608 generates a control signal necessary in accordance with a reading-out demand from the CPU 602 to read out the control procedure or the data in advance stored in the ROM section 617 and transmits back the read content through the system bus bridge 609 to the CPU 602. In addition, in a case where the ROM section 617 is constructed of an electrically rewritable device such as a flash memory, the ROM controller 608 generates a necessary control signal to rewrite the content in the ROM section 617.

The system bus bridge 609 is provided with a function connecting the respective sections constituting the image formation controller ASIC 611 and besides, adjusts the bus right in a case where access demands are issued from a plurality of sections simultaneously. In a case where the CPU 602 and each section having the DMAC substantially simultaneously issue access demands through the RAM controller 607 to the RAM section 615, the system bus bridge 609 can appropriately adjust the access demands according to a priority in advance assigned.

The RAM section 615 is constructed of synchronous DRAM or the like and stores control procedure programs executed by the CPU 602 or temporarily stores image formation data generated at the image processing section 603 and provides a function such as a work memory of the CPU 602. In addition, the RAM section 615 performs temporary buffering of image data which the communication interface section 605 receives from the host apparatus and temporarily stores data from the function expansion unit connected through the expansion bus 613.

The ROM section 617 is constructed of a flash memory or the like and stores parameters necessary for the control procedure and the printer control executed by the CPU 602. The flash memory is an electrically rewritable and nonvolatile device and can rewrite the control procedure and the parameters according to determined sequence.

In addition to the above, each circuit section is provided with a resister setting an operation mode or the like and the CPU 602 can set an operation mode or the like of each circuit section through a resister access bus (not shown).

The printer engine 618 is a print mechanism for printing an image on a print medium based upon binary data transmitted from the controller 601. Fig. 1 referred in the above description is a perspective view showing the general construction of a full line type inkjet printing apparatus according to the present embodiment.

In Fig. 1, after the print medium P receives a sheet fed by the feeding roller 705 and the auxiliary roller 706, the print medium P is conveyed in the direction of the feeding roller 704 and the auxiliary roller 703 and is conveyed in a sub scan direction at a predetermined speed while being held by the two pairs of the rollers. Ink is ejected onto the print medium to be thus conveyed from respective ejection openings of the print head 105 arranged in a main scan direction, at a certain frequency corresponding to the conveying speed of the print medium. The print head 105 includes the full line type print heads for ejecting ink of cyan (C), magenta (M), yellow (Y) and black (K) which are arranged to form two lines of the print heads for each color at a certain interval in a sub scan direction. Specifically, the image data of each of K, C, M and Y are distributed to two planes (data of the divided images) corresponding to the two print heads of each color, and in a line of pixels connected in a sub-scan direction, dots are formed with ink ejected from ejection openings of the two print heads for each color. In the present embodiment, the two planes are referred to as a first plane and a second plane respectively for each of colors (CMYK).

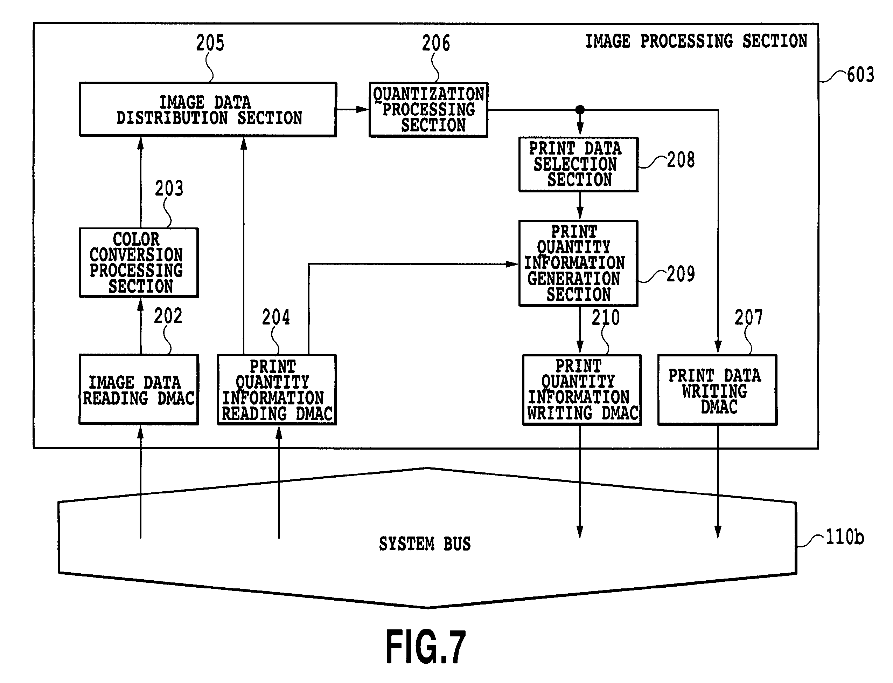

Next, a detail of the image processing section 603 shown in Fig. 6 according to the embodiment of the present invention will be explained with reference to Fig. 7. Fig. 7 is a diagram showing the configuration of the function sections and the format of image data to be processed in the image processing section 603, which is configured to include a color conversion processing section 203, an image data distribution section 205, a quantization processing section 206, a print data selection section 208, a print quantity information generation section 209 and the like.

The color conversion processing section 203 converts a color space of the input image data received from the host apparatus into a color space expressed by an ink color used in the printer engine 618. In the present embodiment, in the image data on the host apparatus, each pixel is expressed by eight bits of red (R), green (G) and blue (B) respectively. The color conversion processing section 203 converts the input image data into a color space expressed by eight bits of each of C, M, Y and K as ink colors used in the printer engine 618. In the color conversion processing section 203 also, a gamma correction is made together in accordance with output characteristics of the printer engine 618.

The image data distribution section 205 distributes the image data input from the color conversion processing section 203 to two planes of each color. In this distribution, as described later in referring to Fig. 8, print quantity information generated at the print quantity information generation section 209 is added to multi-valued (256 values) data to be quantized later out of the multi-valued data of the two planes of each color, in accordance with the selection by the print data selection section 208. In consequence, a given complementary relation can be brought between the respective quantized data of the two planes of each color. More specifically, as described later, the image data distribution section 205 adds the print quantity information to the multi-valued data to correct them and thus brings the given complementary relation between binary data as a result of quantizing the corrected multi-valued data and binary data of the other plane. In the distribution itself in the image data distribution section 205, the image data are equally distributed to the two planes (distribution coefficient is 0.5 in any of the two planes). The distribution coefficient is not limited to the above, but may be different between planes or may be different in accordance with a pixel position as described in Japanese patent Laid-Open No. 2006-231736.

The quantization processing section 206 executes binarization processing by an error diffusion process for each plane of each color. More specifically, the quantization processing section 206 in the present embodiment executes the processing of converting multi-valued image data having 256 gradation values of eight bits into binary data of a lower gradation value as two gradation values of one bit. It should be noted that it goes without saying that the low gradation value data obtained by the quantization are not limited to the binary data. For example, it may be so-called index data of 16 gradation values of four bits. The index data correspond to an arrangement pattern of the number of dots in accordance with the gradation value and the arrangement of dots to be printed is defined by finding the index data. In addition, the method of the quantization is not limited to the error diffusion process, but may be the other method such as a dither process. The print data of Y, C, M, and K binarized by the quantization processing section 206 are sent to the printer engine 618 through a print data writing DMAC 207, a system bus 610, and a printer engine interface section 604.

The binary print data obtained by the quantization processing section 206 are transferred also to the print data selection section 208. The print data selection section 208 selects which color of the print data among the print data of C, M, Y, and K for which the print quantity information is generated. In the present embodiment, three colors of C, M, and K other than Y (yellow) having relatively high lightness or light density are selected. More specifically, the print quantity information is used for reflecting the result of quantization in some plane to quantization in the other plane of the same color, and the generated print quantity information is stored in a given memory until the plane for the reflecting is quantized. In the embodiment of the present invention, for reducing the print quantity information to be stored as much as possible, the selection is made in such a manner as not to generate the print quantity information in regard to Y. This is because Y having relatively high lightness, even if the complementarity is not brought between planes, is considered to have a small impact of not having complementarity on an image quality. That is, only the print data of Y from the quantization processing section 206 are not supplied to the print quantity information generation section 209 and are simply supplied through the print data writing DMAC 207 to the printer engine 618.

The print quantity information generation section 209 generates and updates the print quantity information for the print data of each of C, M, K selected by the print data selection section 208, based on CMK information input from the print quantity information reading DMAC 204. Specially the print quantity information generation section 209 performs a filter calculation to the binary data of the first plane of each color sent from the print data selection section 208.

Figs. 8A and 8B are diagrams showing a filter calculation, wherein Fig. 8A shows coefficients of the filter calculation and Fig. 8B shows the calculation result. In each of these figures, a pixel shown in a hatched line is an object pixel defined as a processing object by the quantization processing section 206 and the print quantity generation section 209 distributes the result of the binarization to the peripheral pixels based on a coefficient of each pixel shown in Fig. 8A. Specifically, when the result of the binarization is "1" (dot print), the result obtained by multiplying 256 by the coefficient of each pixel is defined as a value of each pixel. On the other hand, when the binary data is "0" (dot is not printed), the result obtained by multiplying 0 by the coefficient of each pixel is defined as a value of each pixel. As clearly seen from the coefficients shown in Fig. 8A and the distribution result shown in Fig. 8B, in the value of each pixel in the present embodiment, the pixel corresponding to the object pixel is the largest and the next largest value is distributed to pixels positioned at the upward and downward sides and at the right and left sides of the object pixel.

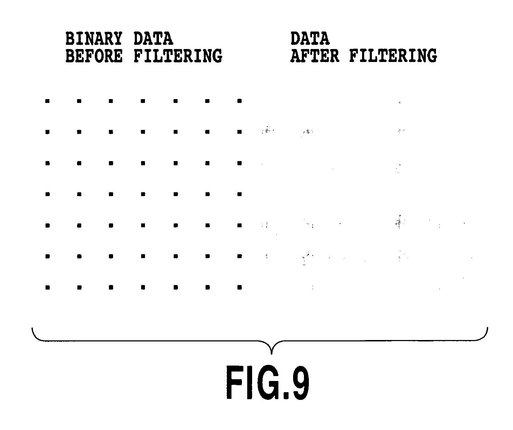

Fig. 9 is diagrams showing the output result (binary data before filtering) of the quantization processing section 209 and the result (data after filtering) after executing the filtering processing to the output result. In an example shown in this figure, a solid image having relatively low density is binarized and as a result the binary data "1" (dot print) exists in each of pixels existing away by a constant interval vertically and horizontally (binary data before filtering). The each pixel of the binary data is made be the object pixel and distributed to the peripheral pixels to obtain an arrangement of multi valued (256 values) data in which a value of the pixel corresponding to the object pixel is maximum. A difference is taken for each pixel between the multi-valued data after filtering obtained as the above and the multi-valued data (data outputted from the image data distribution section 205 to the quantization processing section 206) before being subject to the quantization (binarization) at quantization processing section 2060. Thereby, print quantity information of the plane as the processing object at this time is generated. Density is preserved between the multi-valued data (lightness values of 0 to 255 of red (R), green (G), and blue (B)) outputted from the image data distribution section 205 and the multi-valued data (lightness values of 0 to 255 of red (R), green (G), and blue (B)) converted from the data binarized at the quantization processing section 206. More specifically, even if the difference exists in a pixel unit, the density (here, lightness value of red (R), green (G) and blue (B) as the average pixel value) in a case of averaging the values of pixels of entire plane is reserved. Therefore, the difference in density between both the multi-valued data in the entire plane is 0. Since the density preservation is made in the filtering processing shown in Fig. 8, the difference taken between the multi-valued data after the filtering and the multi-valued data before the quantizing becomes 0 as the whole plane. However, since the difference between the multi-valued data after the filtering and the multi-valued data before the quantizing can be a value other than 0 in the pixel unit, the difference has a tendency to be large in a pixel which is determined to print dot also after binarization (pixel where the binary data is "1"). By using this knowledge, it is possible to control the position of the pixel, to which a dot is printed, in the data after binarization, at the plane to be quantized. Therefore, the print quantity information generation section subtracts the multi-valued data before the binarization from the multi-valued data after filtering to generate the print quantity information. It should be noted that in the present embodiment since the print quantity information is subtracted from the multi-valued data before the binarization of the plane for which quantization is performed later, the print quantity information generation section subtracts the multi-valued data before binarization from the multi-valued data after filtering to generate the print quantity information. However, in a case of adding the print quantity information to the multi-valued data before the binarization of the plane for which quantization is performed later, the print quantity information generation section may subtract the multi-valued data after filtering from the multi-valued data before binarization to generate the print quantity information. The print quantity information for the plane of processing object is added to the print quantity information read by the print quantity information reading DMAC 204 until then (the print quantity information generated for the planes before the plane of then processing object). Then, this added result is updated as the print quantity information. It should be noted that in the processing to the two planes corresponding to two print heads of each color in the present embodiment, the print quantity information is simply generated based on the binary data of the first plane.

The print quantity information generated in the print quantity information generation section 209 is stored through the print quantity information writing DMAC 210, the system bus 610 and the RAM controller 607 in the RAM section 615. The print quantity information reading DMAC 204, as described above, transfers the print quantity information stored in the RAM section 615 to the image data distribution section 205 and the print quantity information generation section 209.

A detail of the image distribution processing using the above-mentioned print quantity information in the image processing data distribution section 205 will be explained below.

The image data are received from the host apparatus and the received data are stored in the RAM section 615. The image data processing section 603 executes the image processing for the first plane and then, the image processing for the second plane, based on the image data stored in the RAM section 615.

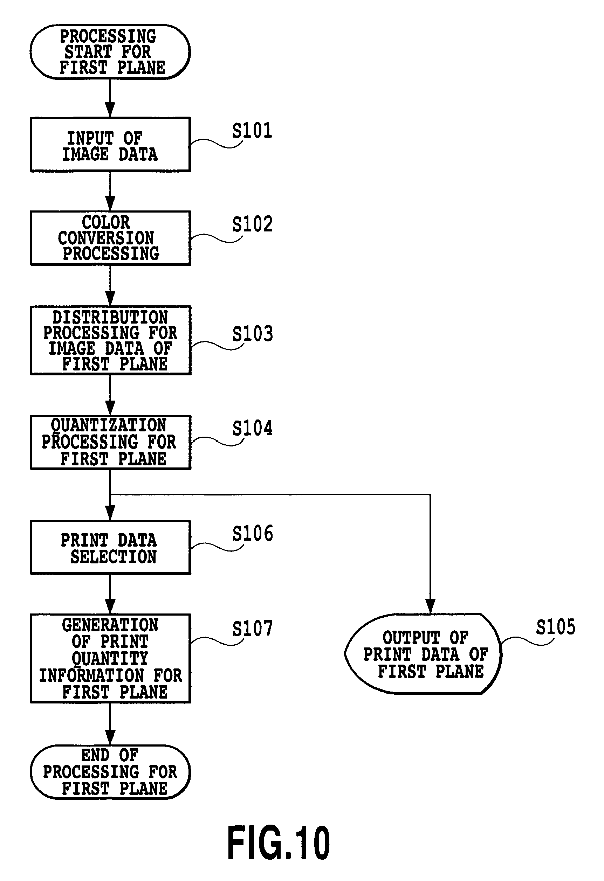

Fig. 10 is a flow chart showing the processing for the first plane by the image processing section 603. At step 101, the image data transferred through the image data reading DMAC 202 from the host apparatus are input. At step 102, the color conversion processing is executed. Then, at step 103, image data distribution processing of the multi-valued data of each color obtained in the color conversion processing is executed for the first plane.

In the present embodiment, the image data distribution processing processes the image data of the first plane to be about a half of the value of the multi-valued data for each color input. That is, the distribution coefficient is defined as 0.5 to obtain the multi-valued image data for the first plane.

A step 104, the quantization processing for each color is executed to the data processed to be distributed for each color. In the present embodiment, the quantization processing is executed by using the error diffusion as described above. The binary data obtained by the quantization processing are transferred to the printer engine 618 as the print data of the first plane at step 105 to be outputted at an appropriate timing. With this process, at step 106, the print data subjected to the quantization in regard to only a color for which the print quantity information is generated are selected. Then, at step 107, the filtering processing described in Figs. 8 and 9 is executed for print data of the color selected by the print data selection to generate the print quantity information. The generated print quantity information is stored in the RAM section 615 by the print quantity information writing DMAC 210.

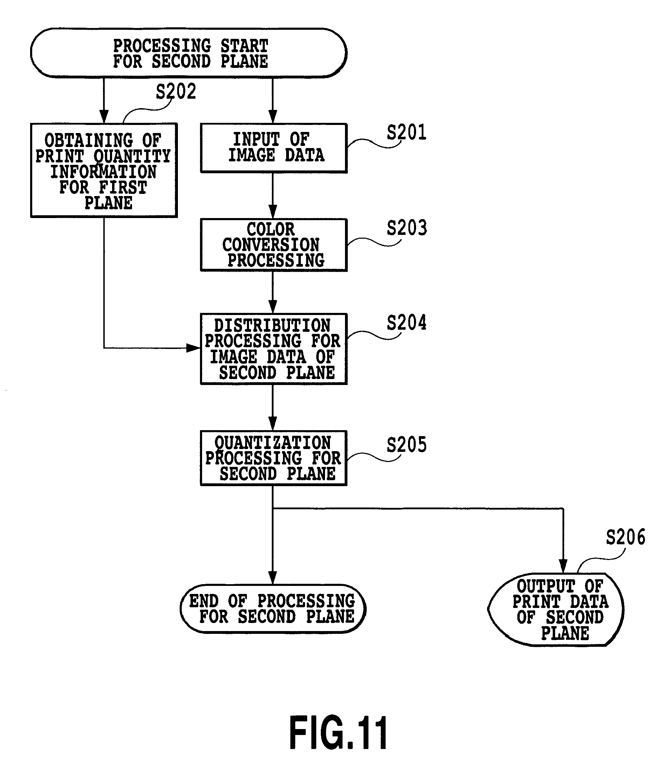

Next, the image processing for the second plane will be explained. Fig. 11 is a flow chart showing the image processing for the second plane. Image data input (S201) and color conversion processing (S203) each show the same processing as those for the first plane described above. Therefore, the multi-valued data for each color after the color conversion process described above is executed can be obtained based on the input image data.

At step 202, the print quantity information generated in the processes for the first plane is obtained from the RAM section 615 in parallel with the above processing. In image data distribution processing for the second plane at step 204, first the same processing as the distribution processing of the image data in the first plane described above is executed for each color. That is, the distributed multi-valued image data are obtained by reducing the value of the multi-valued data for each color to half. Next, data found by converting the print quantity information obtained for the first plane to have a minus value are added to the multi-valued image data for each corresponding pixel.

As described above, the multi-valued data subjected to the distribution processing at step 204 is subjected to the quantization processing at step 205 to be binarized. Then, the obtained binary data is transferred as the print data of the second plane to the printer engine at step 206 to be outputted.

As described above, the binary data of the pixel defined as "1" (dot print) in the quantization result of the multi-valued data for the first plane is a value which is not 0 in the generation processing (S107) of the print quantity information in regard to the object pixel and the peripheral pixels. In the processing for the second plane, this print quantity information is added as a minus value to the multi-valued data of the second plane. Thereby, a value of the multi-valued data of the pixel in the second plane in which the above addition is made is made small. In regard to the pixel of the second plane the value of which is made small by the above addition, probability of becoming a binary data of "1" (dot print) in the quantization (gradation lowering) by the gradation lowering section 8042 is lower depending on the extent of the value made small. More specifically, in an arrangement of the dots printed according to the binary data of the first plane and the second plane, it is possible to control a ratio in which the dots by the first plane and the dots by the second plane are overlapped to be formed, according to the aforementioned filter calculation. As a result, the ratio of the dots formed in the overlapped manner can be restricted to be smaller as compared to the method described in Japanese Patent Laid-Open No. 2000-103088.

In this way, complementarity or exclusiveness between the planes can be controlled for each pixel by using the coefficients in the filter calculation explained in Fig. 8 and in Fig. 9. In addition, a size (filter size) of the area where the coefficients are arranged in the filter calculation also may affect the complementarity between the planes. Further, the coefficients of the filter may be appropriately defined, for example, according to the content of the image to be printed, including an event that all the coefficients of the peripheral pixels other than the object pixel are made 0.

As described above, a ratio of the pixels where the dots formed by plural print heads or plural times of scans are overlapped to be printed can be restricted to be small. As a result, without providing the pixels where the dots are overlapped to be printed more than needed, it is possible to appropriately restrict the density fluctuation due to the printing position shift between the planes or the like.

Since the aforementioned print quantity information is used for a plane to be processed later, it is necessary to store the information in the memory once and in addition the information is stored for each color. Therefore, many memory areas are required in the RAM section 615. For example, as a data quantity for an image having a width of 60 inches, four colors, and eight bits of one pixel with resolution of 1200dpi, a capacity of 1200 × 60 × 4 × 8 = 2,304,000 bits is required for the print quantity information. Recently a printing apparatus of twelve colors is provided and has a trend of requiring a larger memory. Further, since a printing speed of the printing apparatus is increased, a transfer capability of data required in the RAM section 615 is also increasing.

Therefore, in the embodiment of the present invention, even when the print position shift between planes is generated, at the print data selection (S106) the print quantity information is configured not to be generated in regard to a yellow (Y) color, which has high lightness so that an image quality deterioration due to the shift of the print position is hard to be visually recognized. That is, in regard to any of the Y planes, only the processes of step 101 to step 105 shown in Fig. 10 are executed and the processes of step 106 and step 107 are not executed.

In this way, the processing of causing the complementarity between the planes is executed for the colors for which an image deterioration easily occurs and is not executed for the color for which the image deterioration hard to occur. Thereby, it is possible to obtain a desired outputted image with the downsized capacity of the memory and the inexpensive memory system.

It should be noted that, in the aforementioned processing of reflecting the result of the quantization of other plane, the dot arrangements in the plane to which the result of the quantization is reflected can be properly dispersed by executing the quantization of the first plane with the process of properly dispersing and arranging the dots. That the dot arrangements are properly dispersed means a fact that a low frequency component in a space frequency measured in regard to the dot arrangement is small, and the dispersion can be realized by any known conventional method. In general when the print position is shifted between planes, the texture by the dot arrangements in each plane is perceived and this texture may be possibly recognized as an image deterioration. However, in a state where the arrangements of dots in each plane are properly dispersed as described above, even if the print position is shifted between the planes, it is hard to recognize the shift of print position as the image deterioration. That is, in an image where importance is placed on uniformity, a more preferable output image can be obtained not only by restricting the density fluctuation, but also by strengthening robustness to the texture.

### (Second Embodiment)

A second embodiment of the present invention relates to the distribution processing and the quantization processing to image data of two or more planes with use of the configuration similar to that of the first embodiment described above. Specially the present embodiment relates to an example where the number of print heads (ejection opening lines) for ejecting ink is N pieces to each color of C, M, Y, K.

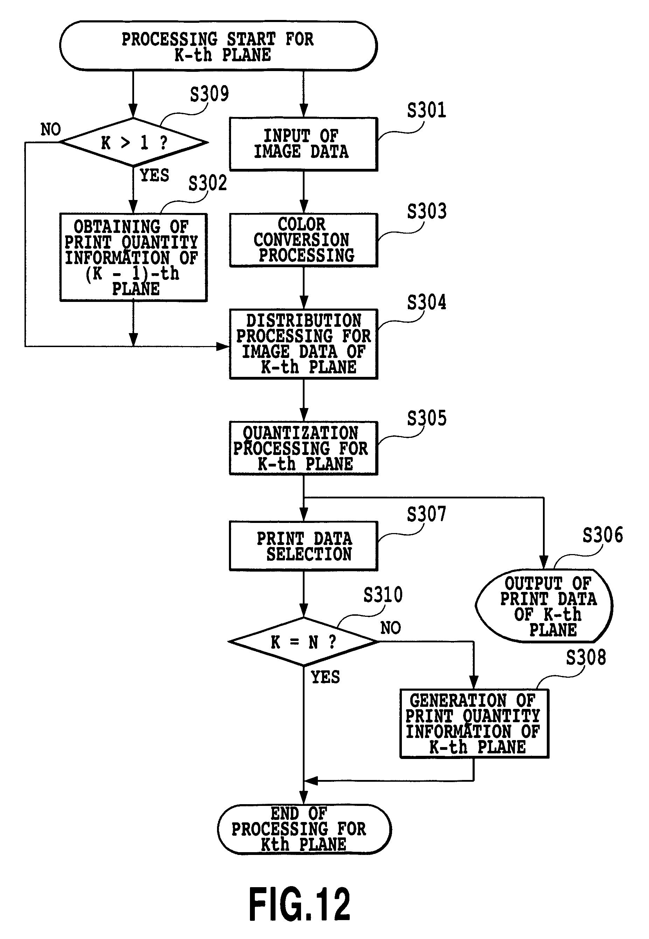

Fig. 12 is flow chart showing the processing of distributing to images of N planes for each color and quantizing the images of N planes for each color, wherein a plane as the processing object is shown as a K-th plane (1 ≤ K ≤ N). The image data input (S301) and the color conversion processing (S303) are executed in the same way as described in Fig. 10. In parallel with it, at step 309 it is determined whether or not K is larger than 1. When K is not larger than 1 and is equal to 1 (NO at step 309), the process goes to step 304, wherein the distribution processing of the image data is executed. When K = 1, since the binary data quantized before then do not exist, the processing in regard to generation and update of the print quantity information using the filter explained in Fig. 8 and in Fig. 9 is not executed or the above generation and update are executed as data in which the binary data is "0" in all the pixels.

When K is 2 or more, similarly to the processing of the second plane as described above in Fig. 11, first at step 302 the print quantity information updated when quantizing of the previous plane by one plane ((K - 1)-th plane) is obtained. The updated print quantity information is made by adding the print quantity information generated based on the quantized data of the first to the (K - 1)-th planes. Therefore, as shown next, the result of the quantization for the first to the (K - 1)-th planes can be reflected to quantization for the K-th plane. That is, the distribution processing of the image data for the K-th plane is executed at step 304. That is, the distributed multi-valued image data found by dividing the value of the multi-valued data for each color equally among N are obtained. Data found by converting the print quantity information obtained when quantizing the (K - 1)-th plane into the information to have a minus value are added to the multi-valued image data having the 1/N values, for each corresponding pixel. Specially the data found by converting the updated print quantity information as the result of adding the print quantity information obtained respectively upon quantizing from the first plane to the (K - 1)-th plane for each pixel into the information to have a minus value are added to the above multi-valued image data. In consequence, the value of the multi-valued data of the pixel in the K-th plane added as above can be made small. Further, at step 305 the quantization processing is executed to the multi-valued data distributed and processed at step 304 to be binarized. The obtained binary data are transferred as the print data of the K-th plane to the printer engine to be outputted.

With this processing, at step 307 the quantized print data are selected only in regard to colors for which the print quantity information is generated. In the present embodiment, the data of each color of C, M and K other than Y are selected in the same way as in the first embodiment. When the K-th plane is not the plane in regard to the last processing, that is, when the K-th plane is not the N-th plane (S 310), at step 308 the above filtering processing is executed to the K-th plane of the color selected by the print data selection to generate the print quantity information. Then the generated print quantity information is added to the past print quantity information read out by the print quantity information reading DMAC 204, and the addition result is updated as the print quantity information. When the K-th plane is the N-th plane in regard to the last processing, since the subsequent quantization processing is not executed, the print quantity information generation (S308) is skipped (S310).

As seen clearly from the above explanation, also in a case of dividing the image data of each color into N planes, it is possible to control a ratio in which dots of each plane overlap to be formed according to the filter calculation. As a result, it is possible to restrict the ratio of dots overlapped and formed to be small. Thereby, it is possible to appropriately restrict the density fluctuation due to the print position shift between the planes without providing pixels more than necessary in which the dots overlap and are printed. In regard to the color for which an image deterioration hard to occur, the processing of generating the complementarity between planes is configured not to be executed, and thereby, the effect of restricting the above density fluctuation can be realized with the downsized capacity of the memory and the inexpensive memory system.

It should be noted that the above N planes relate to N pieces of print heads (print element lines) and N times of scans for each color, but an application of the present invention is not limited to such constructions. For example, the present invention can be applied between planes divided in regard to print heads of different colors or between planes divided in regard to scans by print heads of different colors. Further, the present invention can be applied between a plane of a print head and a plane of a scan.

### (Third Embodiment)

The above-mentioned first and second embodiments have explained an example of the printing apparatus using the full line type print head, but the present embodiment will explain an example in which the present invention is applied to the printing apparatus using the serial type print head.

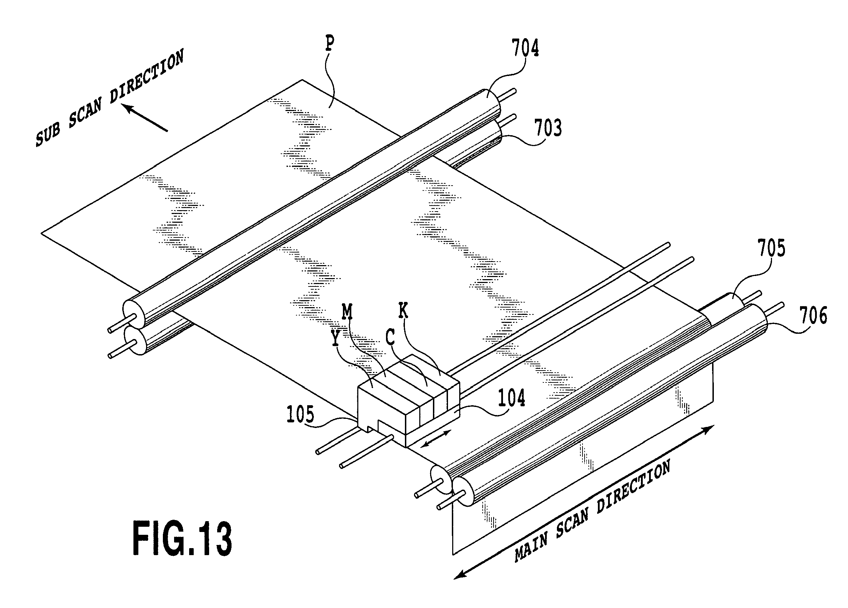

Fig. 13 is a perspective view explaining a schematic structure of a serial type inkjet printing apparatus used in the present embodiment. A print head 105 is mounted on a carriage 104 that moves at a constant speed in a main scan direction and ejects ink according to print data in a frequency corresponding to the constant speed. When one time of scan is completed, a conveying roller 704 and an auxiliary roller 703 rotate and a print medium P held between these rollers and between a feeding roller 705 and an auxiliary roller 706 is conveyed in a sub scan direction by an amount corresponding to a print width by the print head 105. This scan and the conveying operation are intermittently repeated to print an image on the print medium P step by step.

The print head 105 includes print heads of black (K), cyan (C), magenta (M) and yellow (Y) which are located in a main scan direction shown in the figure and plurality of ejection openings are arranged in a sub scan direction in the print heads of the respective colors.

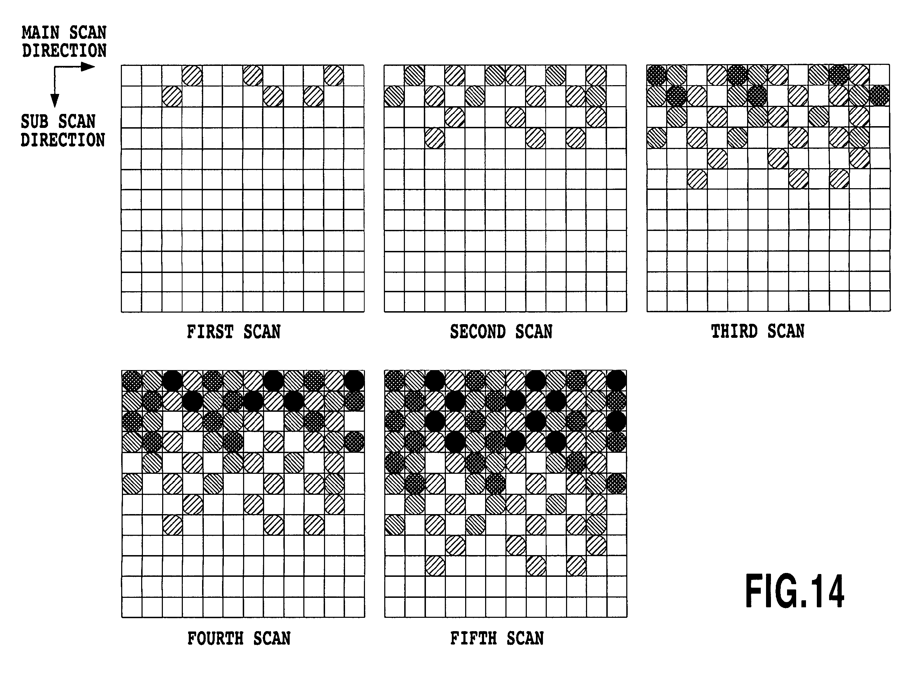

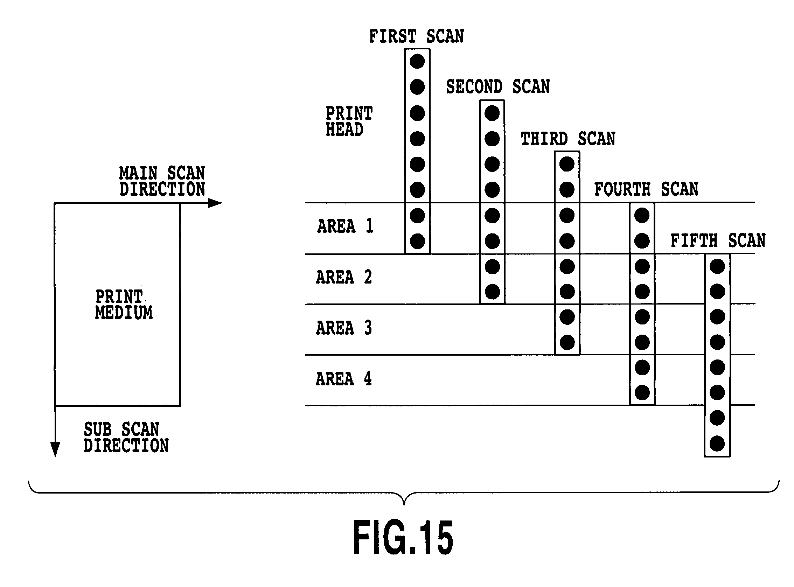

Fig. 14 is diagrams explaining a state of printing by performing plural times of scans (four times of scans in an example shown in the figure). Fig. 14 shows a case where the number of nozzles (ejection openings) of the print head 105 is eight in a sub scan direction for simplification of the drawing and shows a case where for simplification of explanation, dots are formed in all pixels with a perfect complementary relation (dot coverage is 100%). Fig. 15 shows a position relation between the print medium P and the print head 105 for each of a plurality of scans.

As shown in these figures, printing corresponding to two nozzles (eight nozzles divided by four times of scans) is performed at the first scan. Dot coverage at this printing scan is 1/4 of the entirety. Next, after the print medium P is conveyed in a sub scan direction by an amount corresponding to two nozzles, the second scan is carried out. At the second scan, printing corresponding to four nozzles is performed. The dot coverage of this printing scan is 1/4 at lines as the first scan area (area 2: the third line, the fourth line) and 2/4 at lines as the second scan area (area 1: the first line, the second line). Similarly hereinafter, at the third scan, printing is performed using six nozzles, at the fourth scan, printing is performed using eight nozzles, and after the fifth scan, printing is performed using eight nozzles. At a point where the fourth scan is performed, printing at the first line is completed.

In the construction of completing printing of an image by plural times of scans shown above, the image data plane is defined for each of the plural times of the scans of each color, and the distribution processing and the quantization processing similar to those in the first or second embodiment can be executed to the data between the plural planes

### (Fourth Embodiment)

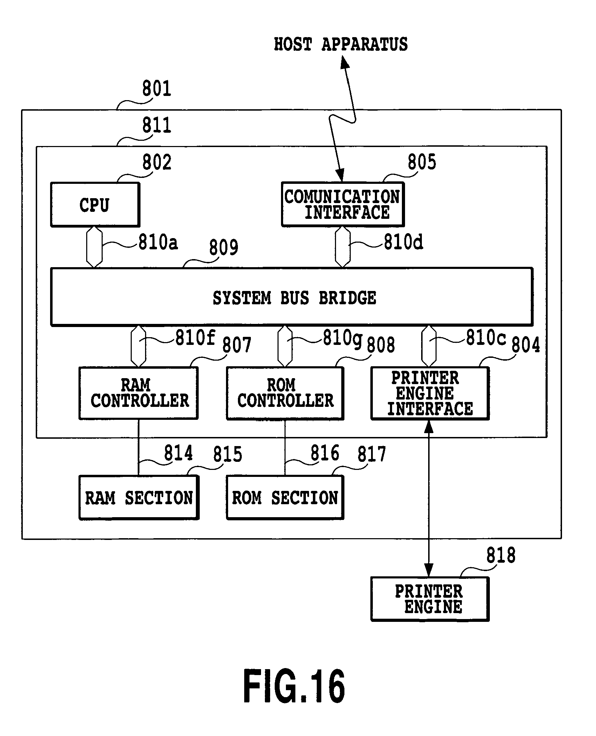

The first to third embodiments relate to an example of executing the distribution processing and the quantization processing in the printing apparatus. However, these processing may be executed in the host apparatus. Fig. 16 is a diagram showing the configuration of the printing apparatus that receives data to be transferred to the print head from the host apparatus and transfers the data to the print head.

A CPU 802 performs control of the printing apparatus or the like. Programs or parameters required for an operation of the CPU 802 and parameters required in the printer engine are stored in a ROM section 817 connected through a ROM controller 808.

In the host apparatus such as a computer, the binary data obtained by the processing explained in the first or second embodiment are transmitted through a communication interface section 805 to a RAM section 815. A printer engine interface section reads out the data stored in the RAM section 815 and transmits the read data to a printer engine 818, which transmits the read data to the print head to be printed.

As described above, the configuration of executing the distribution processing and the quantization processing according to the present invention at the printing apparatus side as in the case of the first to third embodiments and the configuration of executing the distribution processing and the quantization processing according to the present invention at the host apparatus side as in the case of the fourth embodiment constitute the image processing apparatus according to the embodiment of the present invention.

### (Other Embodiment)

As described above, the selection of the print data for generating the print quantity information is made in accordance with lightness of a color to be printed. That is, the color having low lightness is selected preferentially. An application of the present invention is not limited to this construction. For example, the selection of the print data may be made in accordance with the use frequency of a color to be printed. Specially the use frequency of the color to be printed is found from the print data of each color and the print quantity information may be not generated in regard to the print data of the color of which the use frequency is low. That is, the color of which the use frequency is high is selected with priority to generate the print quantity information.

In addition to the color having high lightness (low density) as in the case of yellow, in regard to the print data of a light color having low density to be printed, the print quantity information may be not generated. In addition, reversely in a case where a component of black at the time of printing an image as a print object is in the following area, the print quantity information may be not generated also in regard to the print data of black. That area means a density area (lightness area) where a change in an area coating rate is small even if the print position of the dot at printing is shifted. Here, the area where a change of the above area coating rate is small is the area as follows. One is, even in a case where dots are printed at normal print positions, a high density area (low lightness area) where a great number of dots already overlap between dots on the print medium. Another one is a low density area (high lightness area) where there occurs no overlap of dots between dots on the print medium even if the print position is shifted.

In the above embodiment, the printing apparatus of the inkjet system is explained, but the present invention can be applied to a printing apparatus of a system other than the above inkjet system, such as a thermal-transfer system or an electronic photography system. In addition, it is apparent that the present invention can be applied to a device of generating image formation data to an image formation device such as a digital TV.

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus that, for dividing an image into a plurality of divided images to perform printing, generates print data for each of the plurality of divided images, said apparatus comprising:
quantization means (S104, 206) for quantizing multi-valued data of each of the plurality of divided images to be made print data of lower gradation value than the multi-valued data;
information generation means (S107, 209) for generating print quantity information used for correcting the multi-valued data before the quantization, based on print data obtained by the quantization;
correcting means for correcting the multi-valued data before the quantization by using the print quantity information; and
selection means for selecting the print data from respective print data of the plurality of divided images which is obtained by the quantization, by determining whether to cause said print quantity information generation means to generate the print quantity information based on the print data obtained by the quantization or not.

2. An image processing apparatus as claimed in claim 1, wherein said correcting means corrects the multi-valued data to make a value of the multi-valued data smaller by using the print quantity information.

3. An image processing apparatus as claimed in claim 1, further comprising memory means for storing the print quantity information.

4. An image processing apparatus as claimed in claim 1, wherein said selection means makes the determination based on lightness of a color to be printed.

5. An image processing apparatus as claimed in claim 4, wherein said selection means selects the print data of the color having low lightness preferentially.

6. An image processing apparatus as claimed in claim 1, wherein said selection means makes the determination based on a use frequency of a color to be printed.

7. An image processing apparatus as claimed in claim 6, wherein said selection means selects the print data of the color having high use frequency preferentially.

8. An image processing apparatus as claimed in claim 1, wherein said selection means does not select the print data of a color of yellow.

9. An image processing apparatus as claimed in claim 1, wherein said selection means does not select the print data of a color of a light color.

10. An image processing apparatus as claimed in claim 1, wherein said selection means does not select the print data of a color of black.

11. A printing apparatus that, for dividing an image into a plurality of divided images to perform printing, performs printing based on print data for each of the plurality of divided images, said apparatus comprising:
quantization means for quantizing multi-valued data of each of the plurality of divided images to be made print data of lower gradation value than the multi-valued data;
information generation means for generating print quantity information used for correcting the multi-valued data before the quantization, based on print data obtained by the quantization;
correcting means for correcting the multi-valued data before the quantization by using the print quantity information; and
selection means for selecting the print data from respective print data of the plurality of divided images which is obtained by the quantization, by determining whether to cause said print quantity information generation means to generate the print quantity information based on the print data obtained by the quantization or not.

12. An image processing method that, for dividing an image into a plurality of divided images to perform printing, generates print data for each of the plurality of divided images, said method comprising:
a quantization step of quantizing multi-valued data of each of the plurality of divided images to be made print data of lower gradation value than the multi-valued data;
a information generation step of generating print quantity information used for correcting the multi-valued data before the quantization, based on print data obtained by the quantization;
a correcting step of correcting the multi-valued data before the quantization by using the print quantity information; and
a selection step of selecting the print data from respective print data of the plurality of divided images which is obtained by the quantization, by determining whether to cause said print quantity information generation means to generate the print quantity information based on the print data obtained by the quantization or not.

13. A program that is read by a computer to cause the computer to function as an image processing apparatus that, for dividing an image into a plurality of divided images to perform printing, generates print data for each of the plurality of divided images, said function comprising:
quantization means for quantizing multi-valued data of each of the plurality of divided images to be made print data of lower gradation value than the multi-valued data;
information generation means for generating print quantity information used for correcting the multi-valued data before the quantization, based on print data obtained by the quantization;
correcting means for correcting the multi-valued data before the quantization by using the print quantity information; and
selection means for selecting the print data from respective print data of the plurality of divided images which is obtained by the quantization, by determining whether to cause said print quantity information generation means to generate the print quantity information based on the print data obtained by the quantization or not.
